# EUROPÄISCHE PATENTSCHRIFT

(11) **EP 2 033 698 B1**
(45) Veröffentlichungstag und Bekanntmachung des Hinweises auf die Patenterteilung: **28.10.2015**
(21) Anmeldenummer: 07748809.6
(22) Anmeldetag: 07.06.2007
(51) Int. Cl.: B01D 3/26, B01D 3/20, B01D 3/16

(54) **MASSENÜBERTRAGUNGSVORRICHTUNG**
MASS-TRANSFER DEVICE
DISPOSITIF DE CONTACT À TRANSFERT DE MASSE

(30) Priorität: 13.06.2006 UA 2006006612
(43) Veröffentlichungstag der Anmeldung: 11.03.2009
(73) Patentinhaber: Maleta, Bogdan Vladimirovich, Kievskaya obl. 07700 (UA); Maleta, Olesja Vladimirovna, Kievskaya obl. 07700 (UA)
(72) Erfinder: Maleta, Bogdan Vladimirovich, Kievskaya obl. 07700 (UA); Maleta, Olesja Vladimirovna, Kievskaya obl. 07700 (UA)
(74) Vertreter: Lösch, Christoph Ludwig Klaus
(86) Internationale Anmeldenummer: PCT/UA2007/000038
(87) Internationale Veröffentlichungsnummer: WO 2007/145604

(56) Entgegenhaltungen:
- RU-C1- 2 237 508
- RU-C1- 2 237 508
- SU-A1- 472 663
- SU-A1- 1 212 451
- US-A1- 2002 163 091

## Beschreibung

Die Erfindung bezieht sich auf eine Kontaktvorrichtung für Stoffaustausch mit einer Tellerplatte, einer Blaseneinheit, einer zusätzlichen Tellerplatte, einer Zarge, die an ihrem Umfang mit Öffnungen versehen ist, einem beweglichen Zweiwegeventil, welches in Form von übereinander angeordneten, untereinander mittels eines Distanzsteges verbundene Vollplatten ausgeführt ist, verbunden, mit einem Hub- und Senkbegrenzer.

Darunter fallen Vorrichtungen, welche für die Durchführung von Stoffaustauschvorgängen in einem Gas (Dampf)-Flüssigkeit-System unter Bedingungen des zyklischen Betriebs (bei getrennter Bewegung von Phasen in der Kolonne) bestimmt sind. Die Erfindung kann im Nahrungsmittelsektor, in der Chemie-, der petrochemischen und der erdölverarbeitenden Industrie sowie in anderen Industriezweigen angewendet werden.

Es ist eine Kontaktvorrichtung für Stoffaustausch bekannt, welche eine Tellerplatte mit einem Kontaktelement, eine Zarge, ein bewegliches Zweiwegeventil, einen Hub- und Senkbegrenzer aufweist. Die Zarge weist an ihrem Umfang Öffnungen auf. Das bewegliche Zweiwegeventil ist in Form von übereinander angeordneten Vollplatten ausgeführt. Dabei ist die Vorrichtung mit einer zusätzlichen Tellerplatte ausgerüstet.

Das Kontaktelement dient als Hubbegrenzer des Zweiwegeventils. Die untere Zargenkante dient als Senkbegrenzer. Die Unterkanten der Öffnungen der Zarge sind in der Höhe der zusätzlichen (unteren) Tellerplatte ausgeführt. Außerdem ist das Kontaktelement als Innenkappe mit den tangential abgebogenen Platten der Blaseneinheit ausgeführt. Die Höhe der senkrechten Öffnungen am Umfang der Zarge ist gleich der Höhe des Zweiwegeventils. In den Endstellungen des Zweiwegeventils stellt eine der Ventilplatten die Freiquerschnittsaufteilung der senkrechten Öffnungen der Zarge in gleiche Abschnitte sicher (RU2237508 C1).

Der Mangel dieser Vorrichtung ist der fixierte Freiquerschnitt der Blaseneinheit. Dadurch kommt eine Versetzung des Arbeitsbereichs der Vorrichtung in Richtung einer Erhöhung des Dampfverbrauchs bei geringen Flüssigkeitsbelastungen zustande. Der weitere Mangel der Vorrichtung ist ihre Höhe (das Maß zwischen der Haupt- und der zusätzlichen Tellerplatte), was die Vergrößerung der Kolonnenhöhe und somit den Metallaufwand verursacht.

Bei der durch RU 2237508 C1 bekannten Kontaktvorrichtung für Stoffaustausch mit einer Tellerplatte, einer Blaseneinheit, einer zusätzlichen Tellerplatte, einer Zarge, die an ihrem Umfang mit Öffnungen versehen ist, einem beweglichen Zweiwegeventil, welches in Form von übereinander angeordneten, untereinander mittels eines Distanzsteges verbundene Vollplatten ausgeführt ist, mit einem Hub- und Senkbegrenzer dienen die Blaseneinheit als Hubbegrenzer und die abgebogene untere Kante der Zarge als Senkbegrenzer. Die Blaseneinheit dient dabei als Kontaktelement. Die Kontaktvorrichtung zum Stoffaustausch stellt dabei eine Gesamtheit von Elementen und Baugruppen dar, welche die Funktion des Tellers im Chargenbetrieb gewährleisten. Das Kontaktelement sorgt für den Kontakt zwischen Dampf und Flüssigkeit. Die Blaseneinheit ist ein Bestandteil des Kontaktelements an der Stelle, wo der Dampf in die Flüssigkeit eingespeist wird.

Durch US 2002/163091 A1 ist eine Kontaktvorrichtung für Stoffaustausch mit einer Tellerplatte, einer Blaseneinheit, einem beweglichen Ventil, welches in Form einer perforierten Platte ausgeführt ist, mit einem Hubbegrenzer in Form von an der perforierten Platte angeordneten Beinchen und Senkbegrenzer bekannt. Die Blaseneinheit dient als Senkbegrenzer, die abgebogene untere Kante der Beinchen als Hubbegrenzer. Die Platte sowie die Beinchen des Ventils dienen als Kontaktelement.

Es ist Aufgabe der Erfindung eine Vorrichtung zu schaffen, die eine Erweiterung des Belastungsbereichs in Bezug auf Dampf, eine Senkung des Metallaufwands und eine Minderung der Höhe der Stoffaustauschvorrichtung erreicht und die Sicherheit und die Lebensdauer der Konstruktion erhöht.

Die gestellte Aufgabe wird durch die Merkmale des Anspruchs 1 gelöst.

Die Kontaktvorrichtung für Stoffaustausch enthält eine Tellerplatte mit einem Kontaktelement, eine Zarge, ein bewegliches Zweiwegeventil und einen Hub- und Senkbegrenzer. Am Umfang der Zarge sind Öffnungen ausgeführt. Das bewegliche Zweiwegeventil ist als übereinander aufgestellte Vollplatten ausgebildet. Dabei ist die Vorrichtung mit einer zusätzlichen Tellerplatte versehen. Die Blaseneinheit dient als Hubbegrenzer des Zweiwegeventils, und die untere Zargenkante als Senkbegrenzer. Die Unterkanten der Öffnungen der Zarge sind in der Höhe der zusätzlichen (unteren) Tellerplatte ausgeführt. Die Höhe der senkrechten Öffnungen am Umfang der Zarge ist gleich die Höhe des Zweiwegeventils. In den Endstellungen des Zweiwegeventils stellt eine der Ventilplatten die Freiquerschnittsaufteilung der senkrechten Öffnungen der Zarge in gleiche Abschnitte sicher. Die obere Platte des Zweiwegeventils dient als Kontaktelement und die Blaseneinheit ist mit der Zarge verbunden.

Die Ursache-Wirkung-Beziehung zwischen den vorgeschlagenen Merkmalen und dem technischen Ergebnis besteht im Folgenden:
1. Die vorgeschlagene Kontaktvorrichtung verfügt über verfahrenstechnische Vorteile des Ventiltellers in einem stationären Prozess, und zwar: Die Minderung des Freiquerschnittes der Blaseneinheit des Kontaktelements unter einer Dampfverbrauchminderung. Somit wird der konstante Druckabfall auf dem Boden aufrechterhalten, indem die Position des Zweiwegeventils in den oberen Stellung sichergestellt ist.
2. Wenn das Gas (der Dampf) zum Kontaktelement unter die obere Platte des Zweiwegeventils kommt, wird der Dampfwirkdruck als eine zusätzliche Kraft verwendet, um das Ventil in der oberen Stellung zu halten.
3. Die Höhenminderung der Kontaktvorrichtung um 30 % ermöglicht es, den Metallaufwand für die Kolonnefertigung um 10 % zu reduzieren.
4. Bei einer stufenlosen Dampfsperrung bewegt sich das Ventil nach unten und mindert seine Bewegungsgeschwindigkeit in der Höhe der oberen Reihe der Öffnungen in der Zarge. Damit lässt sich das Ventil stufenlos und stoßfrei auf den Senkbegrenzer nieder. Damit wird die Lebensdauer der Konstruktion vergrößert.

Die Erfindung wird anhand eines in den Zeichnungen schematisch dargestellten Ausführungsbeispiels näher erläutert. Es zeigen:

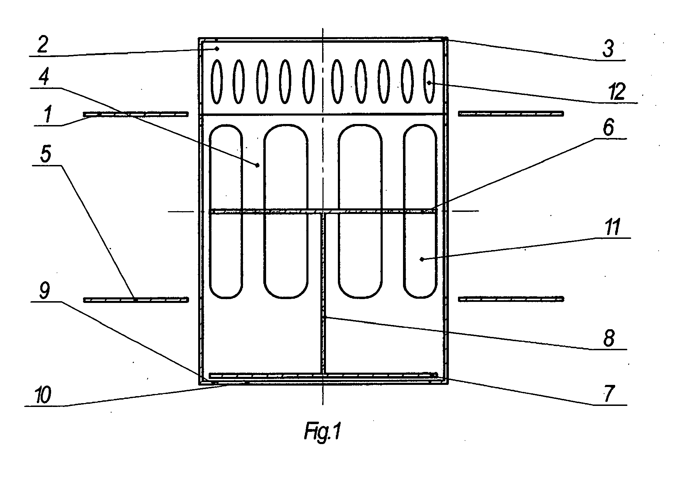

- Fig. 1: die Vorrichtung in der Position, die dem Anfang der Gaszufuhr (Dampfzufuhr) entspricht,

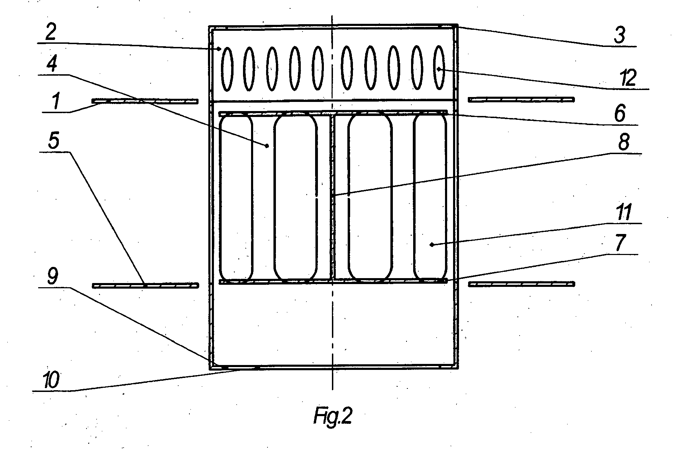

- Fig. 2: die Vorrichtung in der Position, die der Änderung des Hebekraftangriffes von der unteren zur oberen Platte des Zweiwegeventils entspricht und

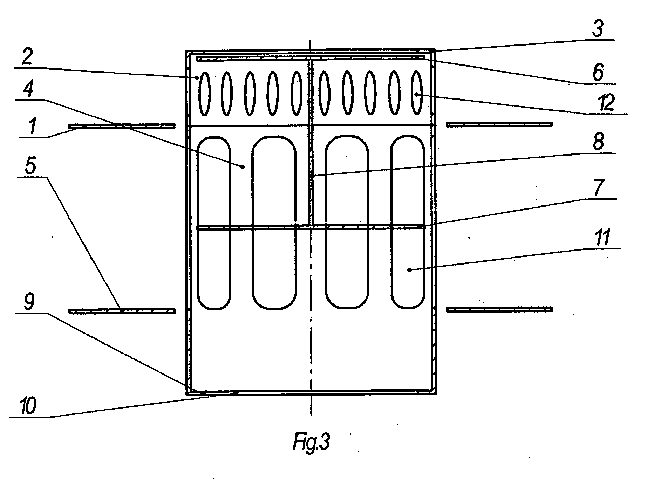

- Fig. 3: die Vorrichtung in der Position, die allen nachfolgenden Zeitpunkten der Gaszufuhr (Dampfzufuhr) entspricht.

Die Kontaktvorrichtung besteht aus einer Tellerplatte 1, einer Blaseneinheit 2 mit Öffnungen 12, einer Zarge 4 mit Öffnungen 11 und 10, einer zusätzlichen (unteren) Tellerplatte 5 und einem Zweiwegeventil. Das Ventil bewegt sich in der Mitte der Zarge 4. Die Zarge 4 besteht aus einer oberen Platte 6 und einer unteren 7 Platte, die mittels eines Distanzsteges 8 miteinander verbunden sind. Die abgebogene untere Zargenkante 4 dient als Senkbegrenzer 9, und die abgebogene obere Kante der Blaseneinheit dient als Hubbegrenzer 3.

Die Funktionsweise der Kontaktvorrichtung ist wie folgt:
Die Gasphase (Dampfphase) während der ersten Dampfperiode bringt das Zweiwegeventil in die fixierte obere Stellung und zwar so, dass die obere Platte 6 des Zweiwegeventils die Öffnung des Kontaktelements 2 schließt. In dieser Stellung dient die obere Platte 6 des Zweiwegeventils als Ventil-Kontaktelement. Der Dampf fließt unter der oberen Platte 6 durch die Öffnungen 12 der Blaseneinheit 2 und wirkt dabei mit der Flüssigkeit zusammen, die sich im Teller befindet.

Nach dem Abschluss der Dampfperiode bewegt sich das Zweiwegeventil unter der Wirkung von seinem eigenen Gewicht und dem Flüssigkeitsgewicht nach unten. In der Höhe der Tellerplatte 1 wird die Geschwindigkeit langsamer und das Ventil lässt sich auf den Senkbegrenzer 9 stoßfrei nieder. Dadurch wird die Lebensdauer der gesamten Konstruktion verlängert.

Die Verzögerungszeit für die Gaszufuhr (Dampfzufuhr) wird je nach der Überlaufszeit der Flüssigkeit von der Tellerplatte 1 in den Übergangsbehälter festgelegt und kann einige Sekunden betragen.

Am Anfang der Gaszufuhr (Dampfzufuhr) auf die untere Platte wird die untere Platte 7 des Zweiwegeventils durch die Hebekraft beansprucht, welche durch den Druckabfall bedingt ist. Unter dieser Kraftwirkung werden das Zweiwegeventil und die Flüssigkeit dahinter hochsteigen, wobei die Flüssigkeit sich im Übergangsbehälter befindet.

Sobald die Platten 6 und 7 des Zweiwegeventils die Höhe der Öffnungen der Zarge 4 erreichen, wechselt der Hebekraftangriff von der unteren Platte 7 zur oberen Platte 6 des Zweiwegeventils. Dabei bleibt der größtmögliche Druckabfall erhalten und dadurch auch die Hebekraft auf die obere Platte 6. Das Gas (der Dampf) fließt in die Öffnungen der Zarge 4 und barbotiert dabei durch die Flüssigkeit. Wird die Öffnung größer, so wird die Geschwindigkeit des Dampfes, welcher durch die Öffnung fließt, niedriger. Somit entstehen die Bedingungen, bei denen die Flüssigkeit zum tiefer angeordneten Teller 5 fließt. Das Zweiwegeventil steigt weiter nach oben, bis es die fixierte obere Stellung erreicht. Das Gewicht des Zweiwegeventils und der Flüssigkeitssäule darüber müssen geringer als die Kraft sein, die infolge des Druckabfalls entsteht, wenn der Druck auf die obere Platte 6 trifft.

Die Zeit, wo die Flüssigkeit von einem Teller zum anderen überströmt, wird Flüssigkeitsperiode genannt. Somit läuft die Zeit des Zyklus ab, welcher aus der Dampf- und der Flüssigkeitsperiode besteht. Die nachfolgenden Zyklen verlaufen auf die gleiche Weise.

Die vorgeschlagene Kontaktvorrichtung ermöglicht es, den Stoffaustauschvorgang im Gas-Flüssigkeits-System (Dampf-Flüssigkeits-System) im zyklischen Betrieb beim einmaligen Wechsel der Flüssigkeitsverzögerung gleichzeitig auf allen Tellern über die gesamte Höhe der Kolonne durchzuführen. Dabei wird der Belastungsbereich in Bezug Flüssigkeit und Dampf erweitert, die Leistungsfähigkeit und die Sicherheit erhöht, und die Lebensdauer der gesamten Konstruktion verlängert.

Der Einsatz der vorgeschlagenen Kontaktvorrichtung beseitigt die Vermischung der Flüssigkeit in den angrenzenden Kontaktstufen und ermöglicht es, die Effizienz des Stoffaustausches um das zwei- bis dreifache gegenüber den stationären Vorgängen zu steigern.

## Patentansprüche

1. Kontaktvorrichtung für Stoffaustausch mit einer Tellerplatte (1), einer Blaseneinheit (2), einer zusätzlichen Tellerplatte (5), einer Zarge (4), die an ihrem Umfang mit Öffnungen (10, 11 und 12) versehen ist, einem beweglichen Zweiwegeventil, welches in Form von übereinander angeordneten, untereinander mittels eines Distanzsteges (8) verbundene Vollplatten (6, 7) ausgeführt ist, verbunden, mit einem Hub- (3) und Senkbegrenzer (9), wobei:
- die abgebogene untere Kante der Zarge (4) als Senkbegrenzer (9) dient,
- die obere Platte (6) des Zweiwegeventils in der oberen Stellung als Kontaktelement dient, und
- die obere Platte (6) des Zweiwegeventils in der oberen Stellung die Öffnung des Kontaktelements (2) schließt,
**dadurch gekennzeichnet, dass**
- die Blaseneinheit (2) mit der Zarge (4) vereinigt ist, und
- die abgebogene obere Kante der Blaseneinheit als Hubbegrenzer (3) dient.

## Claims

1. Contact device for material exchange with a plate (1), a bubble unit (2), an additional plate (5), a frame (4) which is provided at its periphery with openings (10, 11 and 12), a movable two-way valve which is embodied in the form of solid plates (6, 7) that are arranged one above another and are connected together by means of a spacer strip (8), having a lift limiter (3) and lower limiter (9), wherein:
- the bent-down bottom edge of the frame (4) serves as a lower limiter (9),
- the top plate (6) of the two-way valve in the top position serves as a contact element, and
- the top plate (6) of the two-way valve in the top position closes the opening of the contact element (2),
**characterized in that**
- the bubble unit (2) is united with the frame (4), and
- the bent-down top edge of the bubble unit serves as a lift limiter (3).

## Revendications

1. Dispositif de contact pour un échange de matière comprenant une plaque à plateau (1), une unité de soufflage (2), une plaque à plateau supplémentaire (5), un châssis (4) qui est muni sur sa périphérie d'ouvertures (10, 11 et 12), une soupape mobile à deux voies, qui est réalisée sous la forme de plaques massives (6, 7) disposées les unes au-dessus des autres, connectées les unes aux autres au moyen d'une nervure d'espacement (8), avec un dispositif de limitation de levage (3) et d'abaissement (9), dans lequel :
- l'arête inférieure recourbée du châssis (4) sert de dispositif de limitation d'abaissement (9),
- la plaque supérieure (6) de la soupape à deux voies dans la position supérieure sert d'élément de contact, et
- la plaque supérieure (6) de la soupape à deux voies, dans la position supérieure, ferme l'ouverture de l'élément de contact (2),
**caractérisé en ce que**
- l'unité de soufflage (2) est réunie au châssis (4), et
- l'arête supérieure recourbée de l'unité de soufflage sert de dispositif de limitation de levage (3).
